# EUROPEAN PATENT APPLICATION

(11) **EP 4 693 534 A1**
(43) Date of publication of application: **11.02.2026**
(21) Application number: 24778999.3
(22) Date of filing: 28.02.2024
(51) Int. Cl.: H01M 8/04746, H01M 8/04, H01M 8/04694, H01M 8/10

(54) **FUEL CELL SYSTEM**

(30) Priority: 29.03.2023 JP 2023052612
(71) Applicant: HONDA MOTOR CO., LTD., Tokyo 105-8404 (JP)
(72) Inventor: TOYOTA, Shohei, Wako-shi, Saitama 351-0193 (JP); UMEZAWA, Kensuke, Wako-shi, Saitama 351-0193 (JP); MIZUMOTO, Kazuya, Wako-shi, Saitama 351-0193 (JP); HIRANO, Yuichi, Wako-shi, Saitama 351-0193 (JP); IMAMURA, Yuki, Tokyo 107-8556 (JP)
(74) Representative: Weickmann & Weickmann PartmbB
(86) International application number: PCT/JP2024/007292
(87) International publication number: WO 2024/202859

(57) **Abstract**

A fuel cell system includes a first supply part including a first injector and a first ejector and supplying fuel gas to a fuel cell through a first supply flow path connected to a gas inlet portion, a second supply part including a second injector and a second ejector and supplying the fuel gas to the fuel cell through a second supply flow path connected to the inlet portion, and a control unit controlling the first injector and the second injector. A circulation flow rate of the second ejector is larger than a circulation flow rate of the first ejector. The control unit controls the first injector and the second injector so that when either the first injector or the second injector injects the fuel gas at a predetermined cycle, the other of the first injector and the second injector injects the fuel gas during the predetermined cycle.

## Description

### TECHNICAL FIELD

The present invention relates to a fuel cell system including a plurality of ejectors.

### BACKGROUND ART

In recent years, efforts to realize a low-carbon or decarbonized society have intensified, and research and development on fuel cells have been conducted to reduce CO2 emissions and improve energy efficiency of vehicles. In this regard, a fuel cell system in which a pair of ejectors having different circulation capacities are provided in the flow path for supplying fuel gas to the fuel cell has been known (see, for example, Patent Literature 1). In the system described in Patent Literature 1, when the required power is below a threshold value, fuel gas is supplied to the fuel cell via the first ejector having higher circulation capability. When the discharge of fuel gas from the first ejector becomes abnormal, the supply from the first ejector is stopped, and fuel gas is supplied to the fuel cell via the second ejector having lower circulation capability.

### CITATION LIST

### PATENT LITERATURE

Patent Literature 1: Japanese Unexamined Patent Publication No. 2021-118047

### DISCLOSURE OF INVENTION

### PROBLEMS TO BE SOLVED BY THE INVENTION

However, in a fuel cell system that includes a pair of ejectors having different circulation capacities, there is room for improvement in the system described in the above Patent Literature 1 from the perspective of optimizing drainage from the fuel cell.

### MEANS FOR SOLVING PROBLEM

An aspect of the present invention is a fuel cell system, including: a fuel cell configured to generate electric power through an electrochemical reaction between a fuel gas and an oxidant gas, and including a gas inlet portion through which the fuel gas flows into the fuel cell and a gas outlet portion through which the fuel gas flow out of the fuel cell; a first supply part including a first injector configured to inject the fuel gas and supply the fuel gas to the fuel cell through a first supply flow path connected to the gas inlet portion; a second supply part including a second injector configured to inject the fuel gas and supply the fuel gas to the fuel cell through a second supply flow path connected to the gas inlet portion; and a control unit configured to control the first injector and the second injector to inject the fuel gas in an injection mode in accordance with a required power. The first supply part further includes a first ejector provided between the first injector and the gas inlet portion to guide the fuel gas flowing out through the gas outlet portion to the first supply flow path through a first circulation flow path, and the second supply part further includes a second ejector provided between the second injector and the gas inlet portion to guide the fuel gas flowing out through the gas outlet portion to the second supply flow path through a second circulation flow path. The first injector and the second injector are configured such that an amount of the fuel gas injected per a unit time by the first injector is greater than an amount of the fuel gas injected per the unit time by the second injector. The first ejector and the second ejector are configured such that a first circulation flow rate ratio is smaller than a second circulation flow rate ratio, the first circulation flow rate ratio being a ratio of a circulation amount by the first ejector to an amount of the fuel gas injected by the first injector, the second circulation flow rate ratio being a ratio of a circulation amount by the second ejector to an amount of the fuel gas injected by the second injector. The control unit is configured to control the first injector and the second injector such that when either the first injector or the second injector injects the fuel gas at a predetermined cycle, the other of the first injector and the second injector injects the fuel gas during the predetermined cycle.

### EFFECT OF THE INVENTION

According to the present invention, it is possible to improve drainage of water from a fuel cell stack.

### BRIEF DESCRIPTION OF THE DRAWINGS

[FIG. 1] FIG. 1 is a perspective view schematically illustrating an overall configuration of a fuel cell stack according to an embodiment of the present invention.
[FIG. 2] FIG. 2 is a perspective view schematically illustrating a configuration of a unitized electrode assembly included in the fuel cell stack in FIG. 1.
[FIG. 3] FIG. 3 is a diagram illustrating retained water generated in the fuel cell stack in FIG. 1.
[FIG. 4] FIG. 4 is a diagram schematically illustrating a main configuration of the fuel cell system according to the embodiment of the present invention.
[FIG. 5] FIG. 5 is a diagram illustrating a configuration of an ejector included in the fuel cell system in FIG. 4.
[FIG. 6] FIG. 6 is a diagram illustrating a relationship between an injection amount by the injector and a circulation amount by the ejector.
[FIG. 7A] FIG. 7A is a diagram illustrating an example of an injection pattern of the fuel gas in the fuel cell system in FIG. 4.
[FIG. 7B] FIG. 7B is a diagram illustrating a modified example of FIG. 7A.
[FIG. 8] FIG. 8 is a diagram illustrating an example of a change over time in a differential pressure between an inlet and an outlet of the fuel cell stack and in a drainage velocity of a retained water, obtained by the fuel cell system according to the embodiment of the present invention.
[FIG. 9] FIG. 9 is a diagram illustrating a comparative example of FIG. 8.
[FIG. 10] FIG. 10 is a diagram illustrating a relationship between a delay time from the end of injection by the injector on a large ejector side to the start of injection by the injector on a small ejector side, and the drainage velocity of the retained water.
[FIG. 11] FIG. 11 is a flowchart illustrating an example of processing executed by an ECU in FIG. 4.
[FIG. 12] FIG. 12 is a diagram illustrating a relationship between an injection cycle and a valve opening time of the injector in FIG. 4.
[FIG. 13] FIG. 13 is a diagram illustrating a stable and unstable regions of power generation according to an instantaneous gas flow velocity and an average gas flow rate in the fuel cell stack of FIG. 1.
[FIG. 14A] FIG. 14A is a time chart illustrating an example of operation during a transient operation by the fuel cell system according to the embodiment of the present invention.
[FIG. 14B] FIG. 14B is a time chart illustrating another example of operation during a transient operation by the fuel cell system according to the embodiment of the present invention.
[FIG. 15A] FIG. 15A is a flowchart illustrating an example of processing executed by the ECU in FIG. 4, corresponding to the time chart of FIG. 14A.
[FIG. 15B] FIG. 15B is a flowchart illustrating an example of processing executed by the ECU in FIG. 4, corresponding to the time chart of FIG. 14B.
[FIG. 16] FIG. 16 is a diagram illustrating an example of a change in the injection pattern of the injector when the required power increases.

### DESCRIPTION OF EMBODIMENT

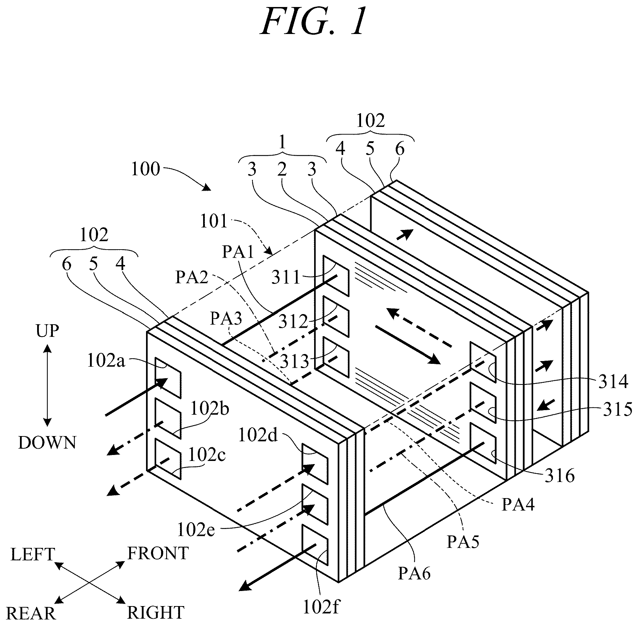

Hereinafter, an embodiment of the present invention will be described with reference to FIGs. 1 to 16. A fuel cell system according to an embodiment of the present invention includes a fuel cell stack that is a main component of a fuel cell. The fuel cell is mounted on, for example, a vehicle and can generate electric power for driving the vehicle. First, the overall configuration of the fuel cell stack will be described schematically. The fuel cell stack may simply be referred to as a fuel cell, and may also be referred to as a fuel cell body.

FIG. 1 is a perspective view schematically showing an overall configuration of a fuel cell stack 100 according to the embodiment of the present invention. Hereinafter, for the sake of convenience, three-axis directions orthogonal to each other as illustrated in the drawing are defined as a front-rear direction, a left-right direction, and an up-down direction, and a configuration of each part will be described according to such definitions. These directions may be different from a front-rear direction, a left-right direction, and an up-down direction of the vehicle. For example, the front-rear direction in FIG. 1 may be the front-rear direction, the left-right direction, or the up-down direction of the vehicle.

As shown in FIG. 1, the fuel cell stack 100 has a cell stacked body 101 formed by stacking a plurality of power generation cells 1 in the front-rear direction, and end units 102 arranged at both front and rear ends of the cell stacked body 101, and the whole of the fuel cell stack 100 has a substantially rectangular parallelepiped shape. The length of the cell stacked body 101 in the left-right direction is longer than its length in the up-down direction. For convenience, a single power generation cell 1 is shown in FIG. 1. The power generation cell 1 has a unitized electrode assembly (UEA) 2 including a membrane electrode assembly that includes an electrolyte membrane and electrodes, and a pair of front and rear separators 3 and 3 arranged on both sides in the front-rear direction of the unitized electrode assembly 2 and sandwiching the unitized electrode assembly 2. The unitized electrode assembly 2 and the separator 3 are alternately arranged in the front-rear direction. The unitized electrode assembly may be referred to as a membrane electrode structure.

The separator 3 includes a pair of metal thin plates having a corrugated cross section, and is integrally formed by joining outer peripheral edges of the thin plates. For the separator 3, a conductive material having excellent corrosion resistance is used, and for example, titanium, a titanium alloy, stainless steel, or the like can be used. A cooling flow path along which a cooling medium flows is formed inside the separator 3 (between the pair of thin plates), and a power generation surface of the power generation cell 1 is cooled by the flow of the cooling medium. For example, water can be used as the cooling medium. A mixture of water and ethylene glycol may also be used.

The separator 3 on the front side of the unitized electrode assembly 2 is, for example, a separator on an anode side (anode separator), and an anode flow path through which a fuel gas flows is formed between the anode separator 3 and the membrane electrode assembly of the unitized electrode assembly 2. The separator 3 on the rear side of the unitized electrode assembly 2 is, for example, a separator on a cathode side (cathode separator), and a cathode flow path through which an oxidant gas flows is formed between the cathode separator 3 and the membrane electrode assembly of the unitized electrode assembly 2. For example, a hydrogen gas can be used as the fuel gas, and for example, air can be used as the oxidant gas. The fuel gas and the oxidant gas may be referred to as a reaction gas without being distinguished from each other.

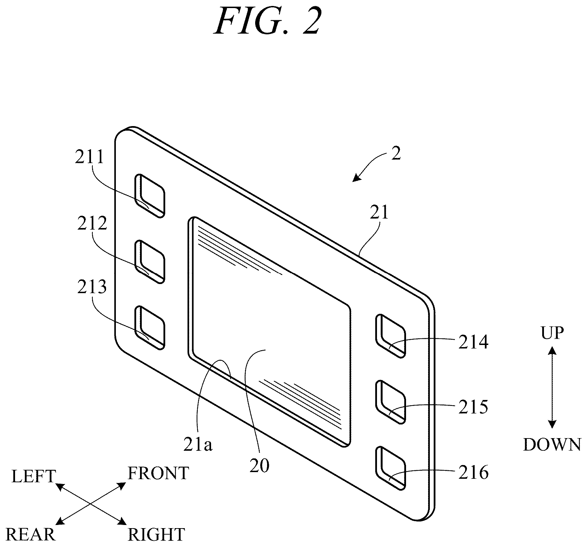

FIG. 2 is a perspective view illustrating a schematic configuration of the unitized electrode assembly 2. As illustrated in FIG. 2, the unitized electrode assembly 2 includes a substantially rectangular membrane electrode assembly (MEA) 20 and a frame 21 that supports the membrane electrode assembly 20. The membrane electrode assembly 20 has an electrolyte membrane, an anode electrode provided on a front surface of the electrolyte membrane, and a cathode electrode provided on a rear surface of the electrolyte membrane.

The electrolyte membrane is, for example, a solid polymer electrolyte membrane, and a thin film of perfluorosulfonic acid containing moisture can be used. Not only a fluorine-based electrolyte but also a hydrocarbon-based electrolyte can be used.

The anode electrode has an electrode catalyst layer formed on the front surface of the electrolyte membrane and served as a reaction field of electrode reaction, and a gas diffusion layer formed on a front surface of the electrode catalyst layer to spread and supply the reaction gas. The cathode electrode has an electrode catalyst layer formed on the rear surface of the electrolyte membrane and served as a reaction field of electrode reaction, and a gas diffusion layer formed on a rear surface of the electrode catalyst layer to spread and supply the reaction gas. The electrode catalyst layer includes a catalytic metal that promotes an electrochemical reaction between hydrogen contained in the fuel gas and oxygen contained in the oxidant gas, an electrolyte (such as an ionomer) having proton conductivity, carbon particles having electron conductivity, and the like. The gas diffusion layer is made of a conductive member having gas permeability, for example, a carbon porous body.

In the anode electrode, the fuel gas (hydrogen) supplied through the anode flow path and the gas diffusion layer is ionized by an action of a catalyst, passes through the electrolyte membrane, and moves to the cathode electrode side. Electrons generated at this time pass through an external circuit and are extracted as electric energy. In the cathode electrode, an oxidant gas (oxygen) supplied via the cathode flow path and the gas diffusion layer reacts with hydrogen ions guided from the anode electrode and electrons moved from the anode electrode to generate water. The generated water gives an appropriate humidity to the electrolyte membrane, and excess water is discharged to an outside of the unitized electrode assembly 2 along the gas flow.

The frame 21 is a thin plate having a substantially rectangular shape, and is made of an insulating resin, rubber, or the like. A substantially rectangular opening 21a is provided in a central portion of the frame 21. The membrane electrode assembly 20 is disposed to cover the entire opening 21a and supported by a peripheral portion of the opening 21a. Three through-holes 211 to 213 penetrating the frame 21 in the front-rear direction are opened side by side in the up-down direction on a left side of the opening 21a of the frame 21, and three through-holes 214 to 216 penetrating the frame 21 in the front-rear direction are opened side by side in the up-down direction on a right side of the opening 21a.

As shown in FIG. 1, in the separators 3 on the front and rear sides of the unitized electrode assembly 2, through-holes 311 to 316 penetrating the separators 3 in the front-rear direction are opened at positions corresponding to the through-holes 211 to 216 of the frame 21. The through-holes 311 to 316 communicate with the through-holes 211 to 216 of the frame 21. The set of the through-holes 211 to 216 and 311 to 316 communicating with each other forms flow paths PA1 to PA6 (indicated by arrows for the sake of convenience) penetrating the cell stacked body 101 and extending in the front-rear direction. The flow paths PA1 to PA6 may be referred to as manifolds. The flow paths PA1 to PA6 are connected to a manifold outside the fuel cell stack 100.

The flow path PA1 (solid arrow) extending forward through the through-holes 211 and 311 is a fuel gas supply flow path. The flow path PA6 (solid arrow) extending rearward through the through-holes 216 and 316 is a fuel gas discharge flow path. The fuel gas supply flow path PA1 and the fuel gas discharge flow path PA6 communicate with the anode flow path facing the front surface of the membrane electrode assembly 20, and as indicated by the solid arrows, the fuel gas flows along the anode flow path from the left to the right through the fuel gas supply flow path PA1 and the fuel gas discharge flow path PA6. The communication between the anode flow path and the other flow paths PA2 to PA5 is blocked via seal portions not shown. The fuel gas flowing along the fuel gas discharge flow path PA6 is the remaining fuel gas after part of it has been partially used at the anode electrode, and this is sometimes referred to as a fuel exhaust gas.

The flow path PA4 (dotted arrow) extending forward through the through-holes 214 and 314 is an oxidant gas supply flow path. The flow path PA3 (dotted arrow) extending rearward through the through-holes 213 and 313 is an oxidant gas discharge flow path. The oxidant gas supply flow path PA4 and the oxidant gas discharge flow path PA3 communicate with the cathode flow path facing the rear surface of the membrane electrode assembly 20, and as indicated by the dotted arrows, the oxidant gas flows along the cathode flow path from the right to the left through the oxidant gas supply flow path PA4 and the oxidant gas discharge flow path PA3. The communication between the cathode flow path and the other flow paths PA1, PA2, PA5 and PA6 is blocked via seal portions not shown. The oxidant gas flowing along the oxidant gas discharge flow path PA3 is the remaining oxidant gas after part of it has been partially used at the cathode electrode, and this is sometimes referred to as an oxidant exhaust gas. The fuel exhaust gas and the oxidant exhaust gas are sometimes collectively referred to as a reaction exhaust without distinguishing between them.

The flow path PA5 (dashed-dotted line arrow) extending forward through the through-holes 215 and 315 is a cooling medium supply flow path. The flow path PA2 (dashed-dotted line arrow) extending rearward through the through-holes 212 and 312 is a cooling medium discharge flow path. The cooling medium supply flow path PA5 and the cooling medium discharge flow path PA2 communicate with the cooling flow path inside the separator 3, and the cooling medium flows along the cooling flow path through the cooling medium supply flow path PA5 and the cooling medium discharge flow path PA2. The communication between the cooling flow path and the other flow paths PA1, PA3, PA4 and PA6 is blocked via seal portions not shown.

The end units 102 arranged on both sides of the cell stacked body 101 each have a terminal plate 4, an insulating plate 5, and an end plate 6. A plurality of through-holes 102a to 102f that penetrate the end unit 102 in the front-rear direction are opened in the rear end unit 102. The through-hole 102a is opened on the extension line of the fuel gas supply flow path PA1 so as to communicate with the fuel gas supply flow path PA1. The through-hole 102b is opened on the extension line of the cooling medium discharge flow path PA2 so as to communicate with the cooling medium discharge flow path PA2. The through-hole 102c is opened on the extension line of the oxidant gas discharge flow path PA3 so as to communicate with the oxidant gas discharge flow path PA3. The through-hole 102d is opened on the extension line of the oxidant gas supply flow path PA4 so as to communicate with the oxidant gas supply flow path PA4. The through-hole 102e is opened on the extension line of the cooling medium supply flow path PA5 so as to communicate with the cooling medium supply flow path PA5. The through-hole 102f is opened on the extension line of the fuel gas discharge flow path PA6 so as to communicate with the fuel gas discharge flow path PA6.

More specifically, a fuel gas tank storing high-pressure fuel gas is connected to the through-hole 102a via an ejector, an injector, etc., and the fuel gas is supplied to the fuel cell stack 100 through the through-hole 102a, as described below. The fuel gas (fuel exhaust gas) is discharged from the through-hole 102f. A compressor for supplying oxidant gas is connected to the through-hole 102d, and the oxidant gas compressed by the compressor is supplied to the fuel cell stack 100 through the through-hole 102d. The oxidant gas (oxidant exhaust gas) is discharged from the through-hole 102c. A pump for supplying cooling medium is connected to the through-hole 102e, and the cooling medium is supplied to the fuel cell stack 100 through the through-hole 102e. The cooling medium is discharged from the through-hole 102b. The discharged cooling medium is cooled by heat exchange in the radiator, and is supplied again to the fuel cell stack 100 through the through-hole 102e.

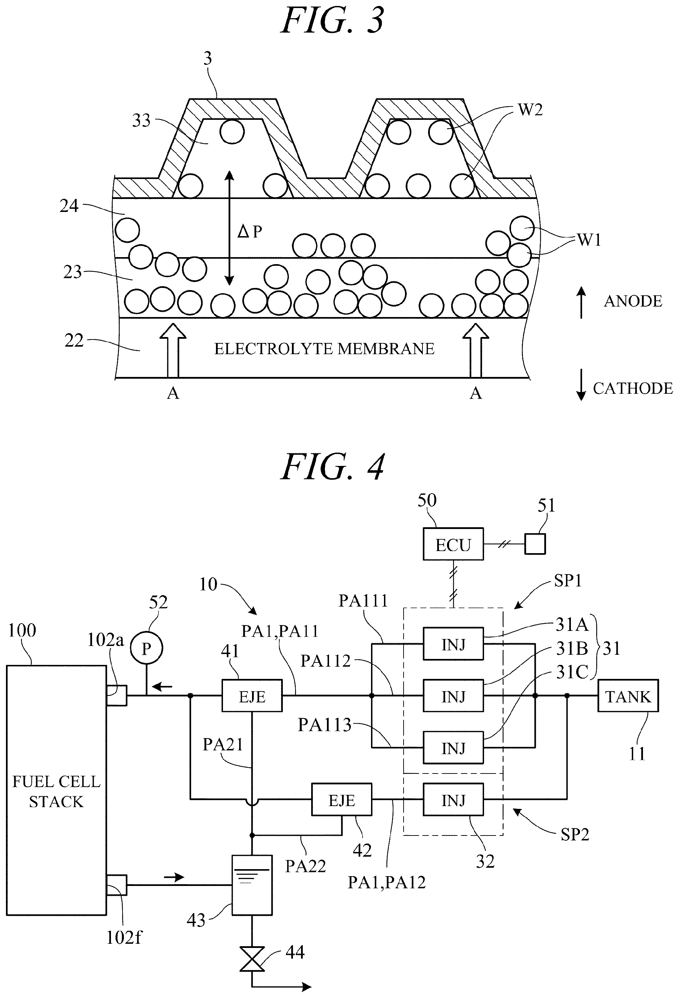

The above is the schematic configuration of the fuel cell stack 100. Meanwhile, in the fuel cell stack 100, generated water resulting from power generation may remain in the vicinity of the membrane electrode assembly 20 and become retained water. FIG. 3 is a partial sectional view of the membrane electrode assembly 20 schematically illustrating the generation of such retained water. As illustrated by arrow A in FIG. 3, the generated water that is generated at the cathode electrode permeates through the electrolyte membrane 22 of the membrane electrode assembly 20, flows toward the anode electrode, and remains in the vicinity (for example, in a region where an ionomer is present) of the anode electrode including the catalyst electrode layer 23 and the gas diffusion layer 24. For convenience, the water remaining in the membrane electrode assembly 20 is referred to as MEA retained water W1.

In addition, even in a case where the generated water flowing to the anode electrode flows into an anode flow path 33 of the separator 3, a portion of the generated water and a portion of the condensed water produced in the anode flow path 33 may be accumulated in the anode flow path 33. For convenience, the water remaining in the flow path is referred to as flow-path retained water W2. The generated water (MEA retained water W1, flow-path retained water W2) accumulated in the fuel cell stack becomes a factor causing power generation instability and degradation of the electrode performance, and thus needs to be promptly discharged. In view of this, in the present embodiment, the fuel cell system is configured as follows.

FIG. 4 is a diagram schematically illustrating a configuration of a main part of a fuel cell system 10 according to the embodiment of the present invention. FIG. 4 mainly illustrates the configuration related to the flow of fuel gas. As illustrated in FIG. 4, the fuel cell system 10 includes a tank 11 in which high-pressure fuel gas is stored, and a supply flow path PA1 that connects a through-hole 102a as an inlet portion of the fuel gas and the tank 11. The supply flow path PA1 includes a pair of supply flow paths PA11 and PA12 provided in parallel with each other. A large flow rate of fuel gas can pass through the supply flow path PA11. For convenience, the supply flow path PA11 is referred to as a large flow path, and the supply flow path PA12 is referred to as a small flow path. The fuel cell system 10 includes a gas supply part SP1 that supplies fuel gas to the fuel cell stack 100 via the large flow path PA11, and a gas supply part SP2 that supplies fuel gas to the fuel cell stack 100 via the small flow path PA12.

The gas supply part SP1 includes an injector (INJ) 31 and an ejector (EJE) 41, which are interposed between the tank 11 on the large flow path PA11 and the through-hole 102a. The gas supply part SP2 includes an injector (INJ) 32 and an ejector (EJE) 42, which are interposed between the tank 11 on the small flow path PA12 and the through-hole 102a. Note that, although not illustrated, a pressure reduction mechanism is provided between the tank 11 and the injectors 31 and 32, and each of the gas supply parts SP1 and SP2 functions as a tank pressure supply mechanism. The injector 31 includes a plurality of (in the drawing, three) injectors (INJ) 31A, 31B, and 31C, which are interposed respectively in flow paths PA111, PA112, and PA113 that are branched from the large flow path PA11 and arranged in parallel.

The injector 32 and each of the injectors 31A to 31C have the same configuration (a diameter of an injection hole or the like). The injector 32 includes a valve body that opens and closes the flow path PA12 and a coil that drives the valve body. The injectors 31A, 31B, and 31C include a valve body that opens and closes the flow paths PA111, PA112, and PA113, respectively, and a coil that drives the valve body. A current flows to the coils of the injectors 31A to 31C and 32 in response to a command from the ECU 50, and thereby the injectors 31A to 31C and 32 are driven to be opened or closed. That is, when the injectors 31A to 31C and 32 are turned on in response to the command from the ECU 50, the coils are energized and the injectors 31A to 31C and 32 are opened. When the injectors 31A to 31C and 32 are turned off in response to the command from the ECU 50, the energization to the coils is cut off and the injectors 31A to 31C and 32 are closed. A drive current is supplied to the coils of the injectors 31A to 31C and 32 via a driver circuit (not illustrated).

The injectors 31 and 32 are turned on and off by PWM control by the ECU 50. The ECU 50 controls a duty ratio (Ti/T0), which is a ratio of a valve opening time (pulse width) Ti to a cycle T0 of the pulse waveform, and thereby adjusts an injection amount of fuel gas injected by each opening of the injectors 31A to 31C and 32. Since the injectors 31A to 31C are arranged in parallel, the maximum injection amount of the injector 31 in the large flow path PA11 is greater than the maximum injection amount of the injector 32 in the small flow path PA12. Hereinafter, the injector 31 may be referred to as a large injector, and the injector 32 may be referred to as a small injector. The large injector 31 means an injector on the ejector 41 side, and the small injector 32 means an injector on the ejector 42 side.

A through-hole 102f (FIG. 1) as an outlet portion of the fuel gas is connected to a gas-liquid separator 43. In the gas-liquid separator 43, moisture contained in the fuel exhaust gas is separated from the fuel exhaust gas and stored. A drain valve 44 is connected to the gas-liquid separator 43. When drain valve 44 is opened, the water stored in the gas-liquid separator 43 is discharged to the outside. The drain valve 44 is opened and closed in response to the command from the ECU 50. The gas-liquid separator 43 is connected to the ejectors 41 and 42 respectively via circulation flow paths PA21 and PA22. The fuel exhaust gas separated in the gas-liquid separator 43 is returned to the ejectors 41 and 42 via the circulation flow paths PA21 and PA22.

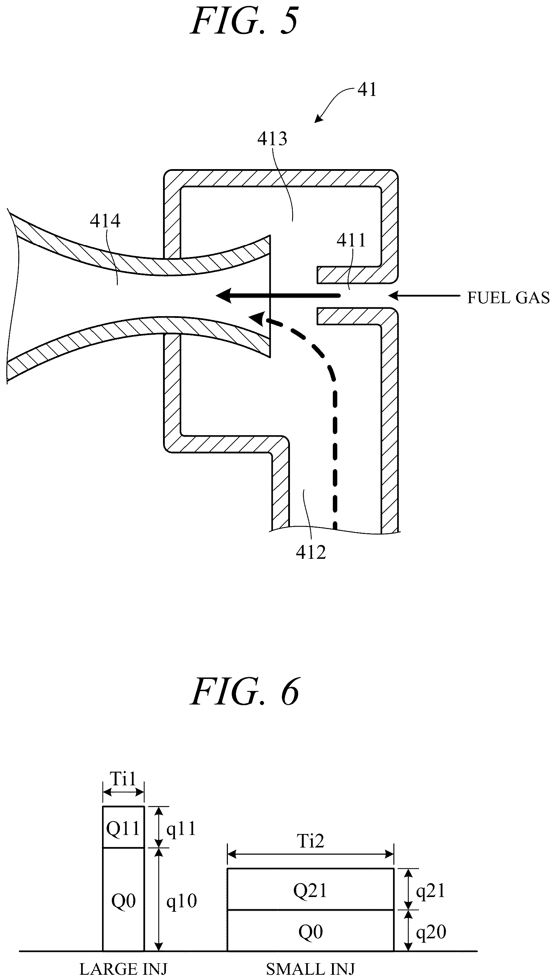

FIG. 5 is a diagram illustrating a schematic configuration of the ejector 41 (referred to as a large ejector for convenience) in the large flow path PA11 As illustrated in FIG. 5, the large ejector 41 includes a nozzle portion 411, a suction portion 412, a merging portion 413, and a diffuser portion 414. The fuel gas injected from the injector 31 passes through the small-diameter nozzle portion 411 and then flows into the diffuser portion 414 via the merging portion 413, as indicated by the solid arrow in FIG. 5. At this time, as indicated by the dashed arrow in FIG. 5, fuel exhaust gas is drawn into the large ejector 41 from the circulation flow path PA21 via the suction portion 412. The fuel exhaust gas, which has been drawn in, merges with the fuel gas, which has passed through the nozzle portion 411, in the merging portion 413, is further made into a uniform flow in the diffuser portion 414, and then is supplied to the fuel cell stack 100 via the through-hole 102a (FIG. 4).

Although not illustrated, similarly to the large ejector 41, the ejector 42 (referred to as a small ejector for convenience) in the small flow path PA12 also includes a nozzle portion, a suction portion, a merging portion, and a diffuser portion. Then, due to the flow of the fuel gas that has passed through the nozzle portion, the fuel exhaust gas is drawn in from the circulation flow path PA22 via the suction portion and is supplied to the fuel cell stack 100 via the through-hole 102a. The diameter of the nozzle portion of the small ejector 42 is smaller than the diameter of the nozzle portion 411 of the large ejector 41.

FIG. 6 illustrates a relationship between the valve opening times Ti1 and Ti2 and the injection amount and circulation amount when each of the injectors 31 and 32 performs one injection. As illustrated in FIG. 6, when the instantaneous injection amounts q10 and q20 obtained by dividing the injection amount Q0 for one injection of the injectors 31 and 32 by the valve opening times Ti1 and Ti2 are defined as the injection amount of the injectors 31 and 32 per unit time, q10>q20 is satisfied.

Therefore, when the gas circulation amount per unit time by the large ejector 41 is defined as q11, and the gas circulation amount per unit time by the small ejector 42 is defined as q21, a circulation flow ratio, which is a ratio of the circulation amount (suction amount) q11 of the large ejector 41 to the injection amount q10 of the large injector 31 per unit time, is smaller than a circulation flow ratio, which is a ratio of the circulation amount (suction amount) q21 of the small ejector 42 to the injection amount q20 of the small injector 32 per unit time. Therefore, the small ejector 42 has higher circulation capability (circulation performance, suction performance). In addition, when the circulation amounts by the large ejector 41 and the small ejector 42 for one injection are defined as Q11 and Q21, respectively, the flow rate (Q0+Q21) of the fuel gas on the downstream side of the small ejector 42 is greater than the flow rate (Q0+Q11) of the fuel gas on the downstream side of the large ejector 41.

The ECU 50 of FIG. 4 is a computer including an arithmetic processing device having a CPU, a ROM, a RAM, and other peripheral circuits. A signal from an accelerator opening degree sensor 51 that detects the opening degree (accelerator opening degree) of an accelerator pedal is input to the ECU 50. The ECU 50 calculates the power required to be generated by the fuel cell stack 100, that is, the required power required by a travel motor on the basis of the signal from the accelerator opening degree sensor 51. Note that the travel motor is an example of a load mounted on a vehicle. The ECU 50 may also calculate the total required power by taking into account the required power required by other loads.

The required power calculated by the ECU 50 is increased as the accelerator opening degree is increased. The ECU 50 controls the injectors 31 and 32 to inject the fuel gas in an injection mode corresponding to the required power. The injection modes include a dual injection mode in which the injection is performed from both the injectors 31 and 32 in one cycle T0, and a single injection mode in which the injection is performed from only one of the injectors 31 and 32. When a case where the required power (for example, current density) is equal to or less than a predetermined value E1 is defined as a low-load state, a case where the required power is greater than the predetermined value E1 and is equal to or less than a predetermined value E2 greater than the predetermined value E1 is defined as a medium-load state, and a case where the required power is greater than the predetermined value E2 is defined as a high-load state, the ECU 50 drives the injectors 31 and 32 on and off so as to inject the fuel gas in the dual injection mode in any of the low-load state, the medium-load state, and the high-load state. That is, the duty ratio of the large injector 31 is controlled according to the required power and the duty ratio of the small injector 32 is controlled. Note that in a predetermined load state (for example, high-load state), the fuel gas may be injected in a single injection mode.

The duty control (PWM control) of the large injector 31 includes sequentially selecting, from among the three injectors 31A to 31C, two injectors 31A and 31B, 31A and 31C, or 31B and 31C, and turning on and off the selected injectors 31A and 31B, 31A and 31C, or 31B and 31C at the same timing. For example, first, the injectors 31A and 31B are first turned on and off at the same timing, then the injectors 31A and 31C are turned on and off at the same timing in the next cycle, and the injectors 31B and 31C are turned on and off at the same timing in the next cycle, and this sequence is repeated. Note that in the low-load state, any one of the injectors 31A to 31C may be sequentially selected, and the selected injector 31A to 31C may be sequentially turned on and off at predetermined timings. In the high-load state, all three injectors 31A to 31C may be turned on and off at the same timing.

The ECU 50 may control the injectors 31 and 32 in the single injection mode according to the required power, instead of always controlling the injectors 31 and 32 in the dual injection mode. For example, only the large injector 31 may be turned on and off in the low-load state, and only the small injector 32 may be turned on and off in the high-load state. That is, the ECU 50 may change the injection mode according to the required power.

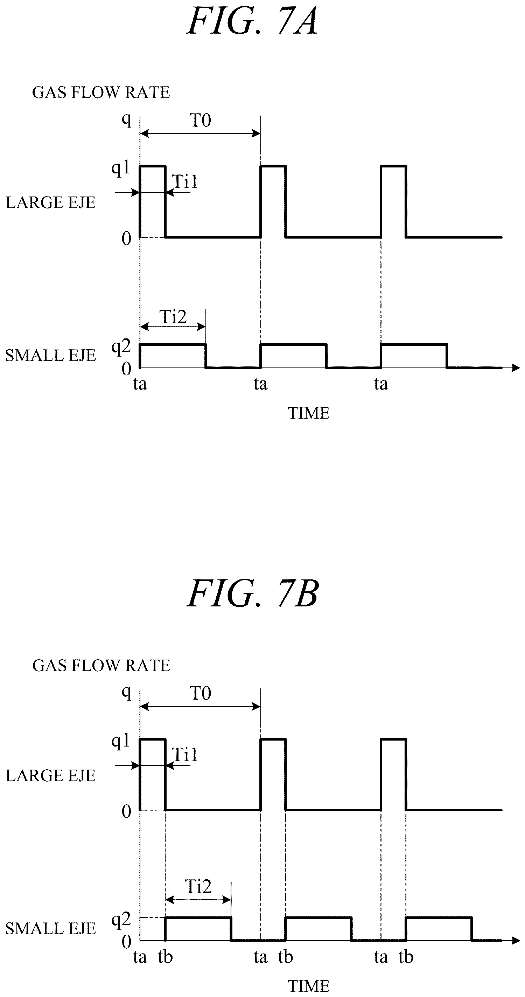

FIG. 7A is a diagram illustrating an example of an injection pattern of the fuel gas from the injectors 31 and 32 in the fuel cell system 10 according to the present embodiment. In FIG. 7A, the horizontal axis represents time, and the vertical axis represents a fuel gas flow rate q1 (q10+q11 in FIG. 6) on the downstream side of the large ejector 41 and a fuel gas flow rate q2 (q20+q21 in FIG. 6) on the downstream side of the small ejector 42. In the example illustrated in FIG. 7A, the large injector 31 is turned on for a predetermined valve opening time Ti1 during the cycle T0. In addition, at the same time as the large injector 31 is turned on, the small injector 32 is turned on for a predetermined valve opening time Ti2.

Since the instantaneous injection amount that is the injection amount of the large injector 31 per unit time is greater than the instantaneous injection amount of the small injector 32 (FIG. 6), the instantaneous gas flow rate q1 on the downstream side of the large ejector 41 when the large injector 31 is on is greater than the instantaneous gas flow rate q2 on the downstream side of the small ejector 42 when the small injector 32 is on. On the other hand, since the valve opening time (on period) Ti2 of the small injector 32 is longer than the valve opening time (on period) Ti1 of the large injector 31, the gas flow rate on the downstream side of the small ejector 42 during one valve opening of the small injector 32 is greater than the gas flow rate on the downstream side of the large ejector 41 during one valve opening of the large injector 31.

When the injector 31 is turned on at time point ta in FIG. 7A, the flow rate of the fuel gas flowing through the anode flow path 33 (FIG. 3) immediately becomes maximum, and the flow velocity of the fuel gas also becomes maximum. A higher instantaneous gas flow rate enhances the drainage effect of the MEA retained water W1, and thus the MEA retained water W1 can be guided to the anode flow path 33.

That is, the drainage effect of the MEA retained water W1 is increased as the flow velocity of the fuel gas in the anode flow path 33 is increased, but in the present embodiment, although the valve opening time Ti1 is short, the fuel gas having a large flow rate q1 is supplied at a predetermined cycle T0 via the large ejector 41. Therefore, the MEA retained water W1 can be easily guided to the anode flow path 33, and the MEA retained water W1 can be discharged well. In particular, in the example of FIG. 7A, the small injector 32 is on when the large injector 31 is on. As a result, the instantaneous flow rate per unit time of the fuel gas flowing through the anode flow path 33 is increased beyond the instantaneous flow rate q1 per unit time flowing through the large ejector 41 (q1+q2), and thus the drainage effect of the MEA retained water W1 can be further enhanced.

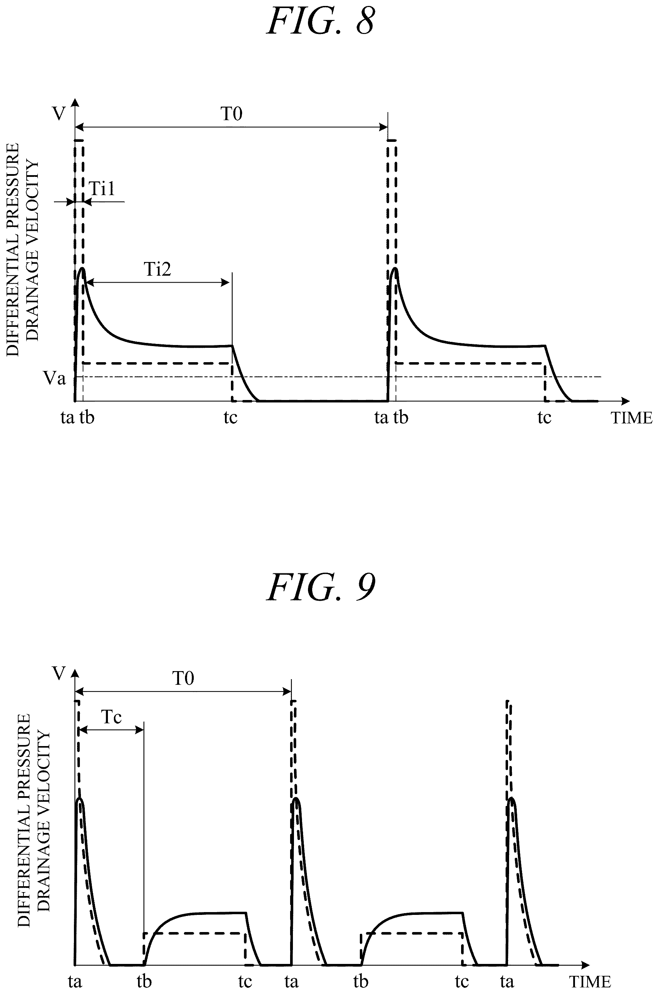

On the other hand, in order to favorably discharge the flow-path retained water W2 to the outside of the fuel cell stack 100, it is necessary to set the drainage velocity to be equal to or greater than a predetermined value Va (FIG. 8), and for this purpose, it is necessary to ensure sufficient acceleration time for the flow-path retained water W2. In this regard, in the present embodiment, since the valve opening time Ti2 of the small injector 32 is set longer than the valve opening time Ti1 of the large injector 31, it is possible to ensure sufficient acceleration time through the injection of the small injector 32. As a result, the flow-path retained water W2 (FIG. 3) in the anode flow path can be favorably discharged along the flow of the fuel gas.

FIG. 7B is a diagram illustrating another example of an injection pattern of the fuel gas from the injectors 31 and 32 in the fuel cell system 10 according to the present embodiment. In the example of FIG. 7B, the small injector 32 is turned on at time point tb when the large injector 31 is turned off. Even in the example of FIG. 7B, since a relatively large instantaneous flow rate of fuel gas is supplied via the large ejector 41, the MEA retained water W1 can be favorably discharged. In addition, the time from when the large injector 31 is turned on until the small injector 32 is turned off is longer than that in FIG. 7A. Therefore, the fuel gas flows through the anode flow path 33 for a longer time, and thus the flow-path retained water W2 can be favorably discharged.

In the examples of FIGs. 7A and 7B, the small injector 32 is turned on not after a predetermined time has elapsed following the turning off of the large injector 31, but turned on at the same time as the turning on or the turning off of the large injector 31. That is, the small injector 32 is turned on between when the large injector 31 is turned on and when the large injector 31 is turned off. In other words, the small injector 32 is turned on immediately after the large injector 31 is turned on. As a result, the operations and effects described below can be further achieved.

FIG. 8 is a diagram illustrating a change in differential pressure between an inlet (through-hole 102a) and an outlet (through-hole 102f) of the fuel gas, and a change in velocity (drainage velocity V) of the flow-path retained water W2 flowing through the anode flow path 33, over time. In the drawing, the change in differential pressure is indicated by a dashed line, and the change in drainage velocity V is indicated by a solid line. FIG. 8 corresponds to the case of FIG. 7B in which the small injector 32 is turned on at the same time as the large injector 31 is turned off. Note that the valve opening time Ti1 of the large injector 31 in FIG. 8 is shorter than that in FIG. 7A, and the duty ratio of the large injector 31 in FIG. 8 is also smaller than that in FIG. 7A.

As illustrated in FIG. 8, when the large injector 31 is turned on at time point ta, the differential pressure (dashed line) is instantaneously increased, and accordingly, the drainage velocity V (solid line) is also increased. Thereafter, the differential pressure is decreased due to the turning off of the large injector 31, but the small injector 32 is turned on at time point tb, so that the differential pressure is not decreased to zero and thus the differential pressure is maintained at a predetermined value over the valve opening time Ti2 of the small injector 32. Therefore, although the drainage velocity V is decreased in a range after time point tb, the degree of decrease is small, and until time point tc when the valve opening time Ti2 ends, the drainage velocity V is maintained at a value at least greater than a predetermined value Va. That is, from time point ta when the large injector 31 is turned on to time point tc when the small injector 32 is turned off, the differential pressure equal to or greater than the predetermined value continues to occur in the fuel cell stack 100, and thus the kinetic energy of the water flowing through the anode flow path 33 is maintained to be equal to or greater than the predetermined value Va. As a result, it is not necessary to accelerate the retained water from zero to a value equal to or greater than the predetermined value Va, and thus it is possible to efficiently drain the flow-path retained water W2. The predetermined value Va is the minimum drainage velocity required for smoothly discharging the flow-path retained water W2.

FIG. 9 illustrates a comparative example of FIG. 8. In FIG. 9, the small injector 32 is turned on at time point tb, which is after a lapse of time Tc since the large injector 31 is turned off. Therefore, before the small injector 32 is turned on, the differential pressure (dashed line) becomes zero, and the drainage velocity V (solid line) also becomes zero. Therefore, continuous drainage between when the large injector 31 is turned on and when the small injector 32 is turned off is interrupted. Then, after the differential pressure starts to be increased again at time point tb, the drainage velocity V is gradually increased. As described above, in a case where the time Tc (referred to as delay time for convenience) from when the large injector 31 is turned off to when the small injector 32 is turned on is long, the drainage velocity V is significantly decreased (for example, to zero). Therefore, in order to increase the drainage velocity V to the predetermined value Va (FIG. 8) or greater, both time and a large amount of energy are required, and thus efficient drainage is difficult.

In this regard, in the example of FIG. 8, since the small injector 32 is turned on at the same time as the large injector 31 is turned off, the delay time Tc is zero, and the drainage velocity V equal to or greater than the predetermined value Va can be maintained. Therefore, since there is no need to accelerate the retained water to the predetermined value Va or greater, and no energy is required to increase the drainage velocity V, efficient drainage is possible.

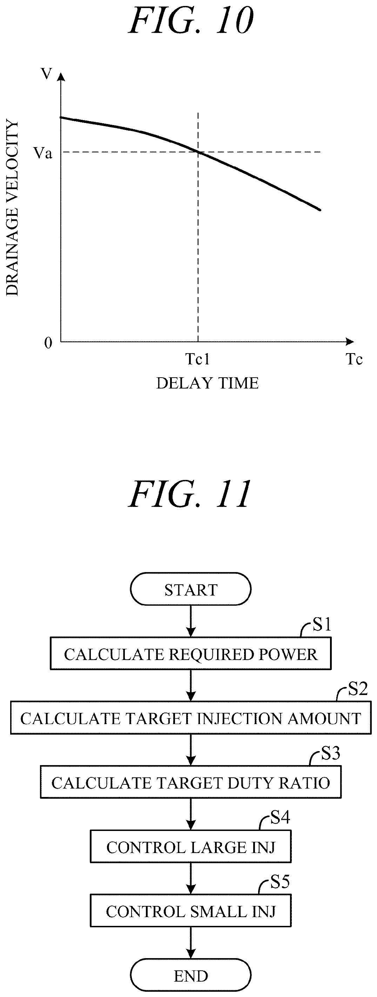

FIG. 10 is a diagram illustrating a relationship between the delay time Tc and the drainage velocity V in the anode flow path 33. As illustrated in FIG. 10, the drainage velocity V is gradually decreased as the delay time Tc is increased. The delay time Tc at which the drainage velocity V is the predetermined value Va is referred to as predetermined delay time Tc1. The predetermined delay time Tc1 is stored in advance in a memory of the ECU 50. The ECU 50 decides the injection timing of the small injector 32 such that the small injector 32 is turned on before the predetermined delay time Tc1 elapses after the large injector 31 is turned off. Note that the case where the small injector 32 is turned on before the predetermined delay time Tc1 elapses includes the case where the small injector 32 is turned on at the same time as the large injector 31 as illustrated in FIG. 7A, and the case where the small injector 32 is turned on when the large injector 31 is turned off as illustrated in FIG. 7B. That is, the case where no delay time Tc is present is included.

Note that in the fuel cell system 10, a plurality of driver circuits (not illustrated) are provided to supply drive current to the injectors 31 and 32, but a predetermined delay time Tc may be required due to constraints during the driving of the driver circuits. In this case, a lower limit time of the delay time Tc is set in advance, and the ECU 50 sets the delay time Tc to be equal to or greater than the lower limit time and equal to or less than the predetermined delay time Tc1.

FIG. 11 is a flowchart illustrating an example of processing executed by the ECU 50 according to a program stored in the memory in advance. The processing illustrated in the flowchart is processing of a case where the fuel gas is injected from the injectors 31 and 32 in the dual injection mode, and the processing of FIG. 11 is repeatedly executed at predetermined timings.

As illustrated in FIG. 11, first, in step S1, the required power is calculated on the basis of the signal from the accelerator opening degree sensor 51. Next, in step S2, a target injection amount of the fuel gas per unit time for the entire injectors 31 and 32 is calculated according to the calculated required power. Next, in step S3, a target duty ratio of the large injector 31 and a target duty ratio of the small injector 32 are calculated so as to inject the target injection amount calculated in step S2. For example, the target duty ratio is calculated together with a target cycle by referring to characteristics stored in advance.

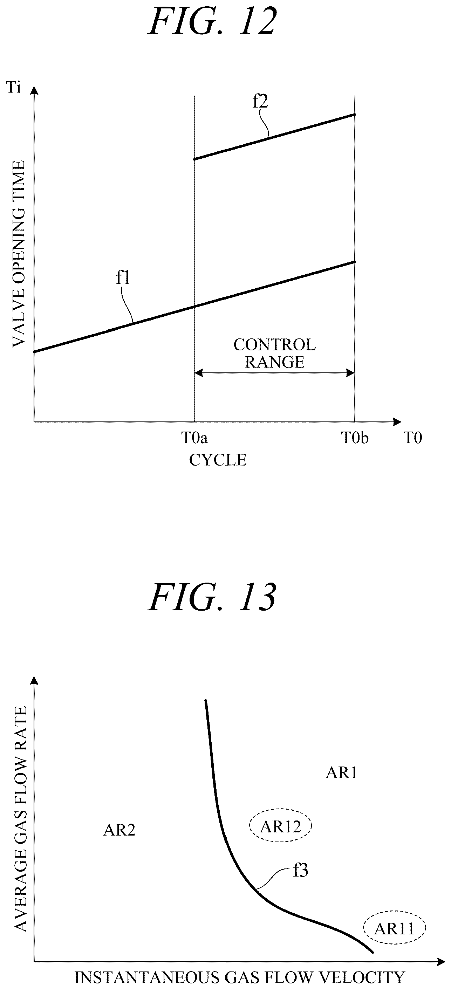

FIG. 12 is a diagram illustrating a relationship between the cycle and the valve opening time in the dual injection mode stored in advance. A characteristic f1 in the drawing is a characteristic of the large injector 31, and a characteristic f2 is a characteristic of the small injector 32. Both characteristics f1 and f2 are upward-sloping characteristics, and the valve opening time Ti is increased as the cycle T0 is increased. A range from a lower limit cycle T0a to an upper limit cycle T0b in the drawing is a control range, and the ECU 50 calculates the target cycle and the target duty ratio within the control range. Note that the ECU 50 may calculate the target cycle and the target duty ratio by using a predetermined calculation formula.

Next, in step S4, the ECU 50 outputs a control signal to the large injector 31 (specifically, driver circuit) such that the large injector 31 is turned on and off at the target cycle and according to the target duty ratio. As a result, the large injector 31 is opened, and the fuel gas with a large instantaneous flow rate q1 (FIG. 7A, FIG. 7B) is supplied to the fuel cell stack 100 via the large ejector 41. Therefore, the MEA retained water W1 accumulated in the vicinity of the anode electrode can be favorably guided to the anode flow path 33.

Next, in step S5, the ECU 50 outputs a control signal to the small injector 32 (specifically, driver circuit) such that the small injector 32 is turned on and off at the target cycle and according to the target duty ratio. In this case, the control signal is output such that the small injector 32 is turned on before the predetermined delay time Tc1 elapses after the large injector 31 is turned off. For example, the ECU 50 outputs a control signal such that the small injector 32 is turned on at the same time as the large injector 31 is turned on, or such that the small injector 32 is turned on at the same time as the large injector 31 is turned off. In this case, the predetermined delay time Tc1 is zero in either case. As a result, since the small injector 32 is turned on immediately after the large injector 31 is turned on, the drainage velocity V of the flow-path retained water W2 can be maintained to be equal to or greater than the predetermined value Va (FIG. 8) until the small injector 32 is turned off after the large injector 31 is turned on, and thus the flow-path retained water W2 in the anode flow path can be favorably discharged.

FIG. 13 is a diagram illustrating a range of a power generation condition in which stable power generation can be obtained. In the drawing, the horizontal axis represents the instantaneous flow velocity of the fuel gas corresponding to the gas flow rates q1 and q2 in FIG. 7A. The vertical axis represents an average gas flow rate obtained by dividing the total flow rate (sum of the injection amount Q0 and the circulation amounts Q11 and Q21 of FIG. 6) of the fuel gas supplied to the fuel cell stack 100 in a predetermined time (for example, the cycle T0), by the predetermined time (for example, T0). With a characteristic f3 as a boundary, the right side is a stable region AR1 of the power generation, and the left side is an unstable region AR2 of the power generation.

According to the characteristic f3, the average gas flow rate is decreased as the instantaneous gas flow velocity is increased. Therefore, in a case where stable power generation is to be achieved using only the injection by the large injector 31, since the average gas flow rate is small, a control target value is defined within a region AR11 in FIG. 13, for example. In this case, since the control target range is narrow, the constraints on the fuel cell system are increased, leading to an increase in cost. In contrast, in the present embodiment, the fuel gas is injected not only by the large injector 31 but also by the small injector 32 having a higher circulation flow ratio, and thus the average gas flow rate is increased. As a result, the control target value can be set, for example, within a region AR12 in FIG. 13. Therefore, it is not necessary to significantly increase the instantaneous gas flow path, and stable power generation can be easily achieved while suppressing an increase in cost.

According to the present embodiment, the following operations and effects can be achieved.
(1) The fuel cell system 10 includes: the fuel cell stack 100 that generates power through an electrochemical reaction between fuel gas and oxidant gas and is provided with the through-hole 102a as a gas inlet portion into which the fuel gas flows, and the through-hole 102f as a gas outlet portion from which the fuel gas flows out; the gas supply part SP1 that includes the large injector 31 injecting the fuel gas and supplies the fuel gas to the fuel cell stack 100 via the large flow path PA11 connected to the through-hole 102a; the gas supply part SP2 that includes the small injector 32 injecting the fuel gas and supplies the fuel gas to the fuel cell stack 100 via the small flow path PA12 connected to the through-hole 102a; and the ECU 50 that controls the large injector 31 and the small injector 32 to inject the fuel gas in an injection mode according to the required power (FIG. 4). The gas supply part SP1 further includes the large ejector 41 that is provided between the large injector 31 and the through-hole 102a and guides the fuel gas discharged from the through-hole 102f to the large flow path PA11 via the circulation flow path PA21 (FIG. 4). The gas supply part SP2 further includes the small ejector 42 that is provided between the small injector 32 and the through-hole 102a and guides the fuel gas discharged from the through-hole 102f to the small flow path PA12 via the circulation flow path PA22 (FIG. 4). The large injector 31 and the small injector 32 are configured such that the injection amount q10 of the fuel gas per unit time by the large injector 31 is greater than the injection amount q20 of the fuel gas per unit time by the small injector 32 (FIG. 6). The large ejector 41 and the small ejector 42 are configured such that the circulation flow ratio (a first circulation flow ratio) as the ratio of the circulation amount q11 in the large ejector 41 to the injection amount q10 of the fuel gas by the large injector 31 is smaller than the circulation flow ratio (a second circulation flow ratio) as the ratio of the circulation amount q21 by the small ejector 42 to the injection amount q20 of the fuel gas by the small injector 32 (FIG. 6). When the large injector 31 injects the fuel gas at the predetermined cycle T0, the ECU 50 controls the large injector 31 and the small injector 32 such that the small injector 32 injects the fuel gas for an injection duration longer than that of the large injector 31 during the predetermined cycle T0 (FIGs. 7A and 7B).
   With this configuration, not only the flow-path retained water W2 accumulated in the anode flow path 33 but also the MEA retained water W1 accumulated inside the membrane electrode assembly 20 can be drained from the fuel cell stack 100 at the predetermined cycle T0, and thus optimization of the drainage performance can be achieved. As a result, the drainage performance of the fuel cell stack 100 is improved, and power generation instability and deterioration of electrode performance can be suppressed. That is, when the instantaneous gas flow rate is increased by the turning on of the large injector 31, the MEA retained water W1 can be favorably discharged, but the injection duration of the fuel gas is short, so that sufficient acceleration time for the flow-path retained water W2 cannot be ensured, and the flow-path retained water W2 cannot be discharged favorably. On the other hand, since the valve opening time Ti2 of the small injector 32 is longer than the valve opening time Ti1 of the large injector 31 (FIG. 12), the drainage performance of the flow-path retained water W2 is improved by the turning on of the small injector 32, but the instantaneous gas flow rate is small, so that the MEA retained water W1 cannot be sufficiently discharged. In this regard, in the present embodiment, since the fuel gas is injected in the dual injection mode in which the injection of the large injector 31 and the injection of the small injector 32 are combined, it is possible to favorably discharge the MEA retained water W1 and the flow-path retained water W2.
(2) The ECU 50 controls the large injector 31 and the small injector 32 such that the small injector 32 injects the fuel gas at the same time as the large injector 31 injects the fuel gas or within a predetermined time (for example, valve opening time Ti1) after the large injector 31 injects the fuel gas (FIGs. 7A and 7B). In order to smoothly discharge the retained water from the fuel cell stack 100, it is necessary to set the drainage velocity V to be equal to or greater than the predetermined value Va, but in the present embodiment, since the drainage velocity V can be maintained to be equal to or greater than the predetermined value Va from the start of the injection by the large injector 31 until the end of the injection by the small injector 32, efficient drainage can be achieved.
(3) The ECU 50 controls the large injector 31 and the small injector 32 such that the small injector 32 injects the fuel gas before the injection amount of the fuel gas by the large injector 31 becomes zero (FIG. 8). For example, the small injector 32 is turned on before the predetermined delay time Tc1 elapses after the large injector 31 is turned off. As a result, a decrease in the drainage velocity V can be suppressed, and efficient drainage can be performed.
(4) The large injector 31 includes the plurality of injectors 31A to 31C each having the same configuration as the small injector 32 (FIG. 4). As a result, types of components can be saved, and the fuel cell system 10 can be configured at a low cost.

In the fuel cell system 10 of the present embodiment, a supply amount of the fuel gas is changed in accordance with the increase or decrease in the required power, and a generation amount of the generated water is also changed accordingly. Therefore, during the transient operation where the required power is increased or decreased, it is preferable to perform control different from that during the non-transient operation to enhance the drainage performance. In view of this, in the present embodiment, the fuel cell system 10 is further configured as follows.

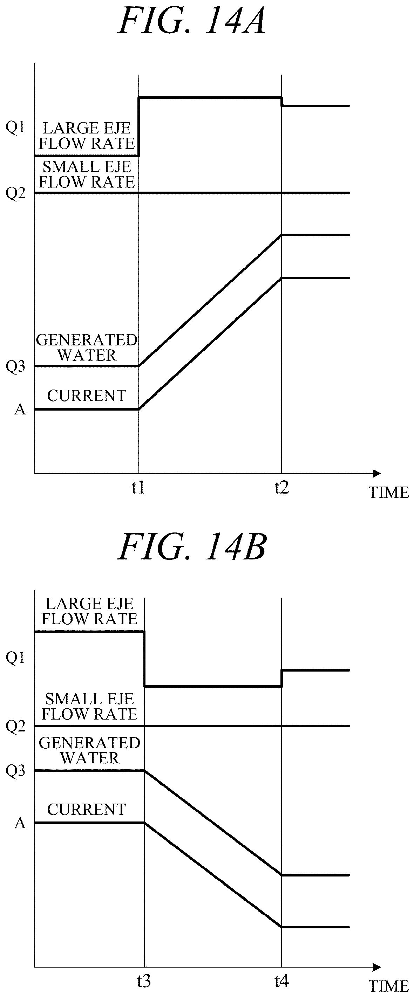

FIGs. 14A and 14B are time charts illustrating an example of an operation during the transient operation of the fuel cell system 10 according to the present embodiment, and illustrate changes over time, of a flow rate (large EJE flow rate) Q1 of the fuel gas per unit time after passing through the large ejector 41, a flow rate (small EJE flow rate) Q2 of the fuel gas per unit time after passing through the small ejector 42, an amount Q3 of the generated water that is generated in the membrane electrode assembly 20, and a current A flowing to the load (travel motor). FIG. 14A illustrates the operation when the required power is increased due to, for example, an increase in the depression amount of the accelerator pedal, and FIG. 14B illustrates the operation when the required power is decreased due to a decrease in the depression amount of the accelerator pedal.

The large EJE flow rate Q1 in FIGs. 14A and 14B is a value obtained by dividing the flow rate of the fuel gas flowing through the large ejector 41 when the large injector 31 injects the fuel gas once, by the cycle T0, and corresponds to the average flow rate of the fuel gas flowing through the large ejector 41. The small EJE flow rate Q2 in FIGs. 14A and 14B is a value obtained by dividing the flow rate of the fuel gas flowing through the small ejector 42 when the small injector 32 injects the fuel gas once, by the cycle T0, and corresponds to the average flow rate of the fuel gas flowing through the small ejector 42. Instead of the large EJE flow rate Q1 and the small EJE flow rate Q2, similar characteristics can be obtained even in a case of using the average injection amount of the large injector 31, which is obtained by dividing the injection amount of the large injector 31 per injection by the cycle T0, and the average injection amount of the small injector 32, which is obtained by dividing the injection amount of the small injector 32 per injection by the cycle T0.

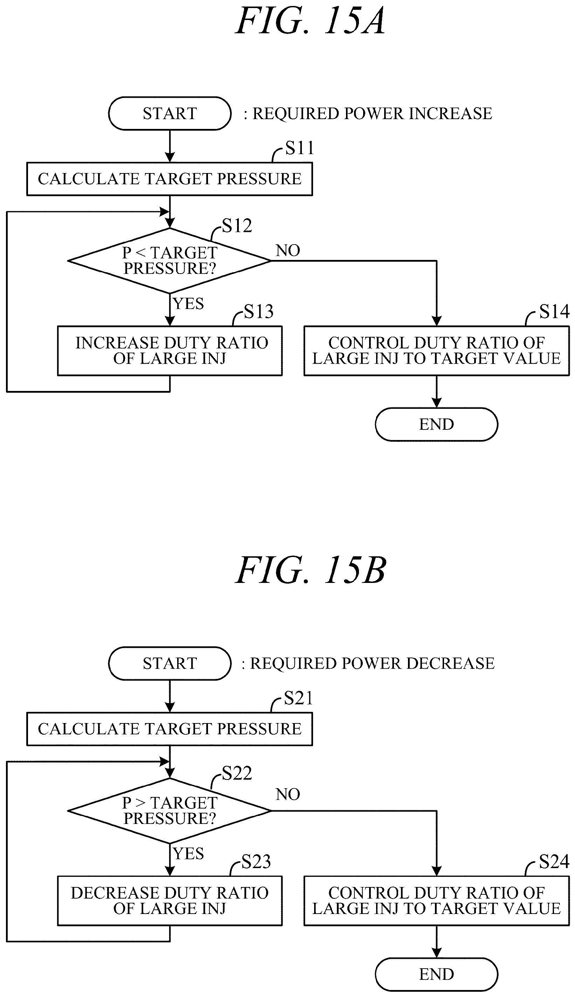

FIGs. 14A and 14B are time charts when predetermined processing is executed by the ECU 50. FIGs. 15A and 15B are flowcharts illustrating an example of the processing executed by the ECU 50 in accordance with a predetermined program, and respectively correspond to the time charts of FIGs. 14A and 14B. Note that in executing the processing of FIGs. 15A and 15B, it is necessary to detect a pressure P of the fuel gas at the inlet of the fuel cell stack 100. The pressure P is detected by a pressure sensor 52 connected to the flow path on the downstream side of the ejectors 41 and 42, as illustrated in FIG. 4.

The flowcharts of FIGs. 15A and 15B are started when a predetermined control start condition is satisfied. Specifically, the ECU 50 determines whether or not the degree of increase in the required power is equal to or greater than a predetermined value, on the basis of the signal from the accelerator opening degree sensor 51. More specifically, it is determined whether or not the required power is increased by an amount equal to or greater than a predetermined value, or whether or not the rate of increase of the required power is equal to or greater than a predetermined value. Then, when the ECU 50 determines that the degree of increase in the required power is equal to or greater than the predetermined value, it is determined that the control start condition is satisfied and the processing of FIG. 15A is started.

As illustrated in FIG. 15A, the ECU 50 first calculates a target pressure Pa of the fuel gas at the inlet of the fuel cell stack 100 in step S11. In this case, in order to increase the inlet pressure P promptly, the ECU 50 calculates a value that is higher by a predetermined value or a predetermined ratio than a control pressure Pb corresponding to the required power determined by the accelerator pedal opening degree, as the target pressure Pa. The target pressure Pa is increased as the degree of increase in the required power is increased.

Next, in step S12, ECU 50 determines whether or not the pressure P detected by the pressure sensor 52 is lower than the target pressure Pa. In a case where an affirmative determination is made in step S12, the processing proceeds to step S13, and the ECU 50 instantaneously increases the duty ratio of the large injector 31 to a target value corresponding to the target pressure Pa, while maintaining the duty ratio of the small injector 32 constant. As a result, as illustrated in FIG. 14A, the large EJE flow rate Q1 is instantaneously increased (time point t1) while the small EJE flow rate Q2 is kept constant. The increase in the duty ratio continues until the pressure P detected by the pressure sensor 52 reaches the target pressure Pa. As a result, the amount of generated water that is generated in the membrane electrode assembly 20 is increased, and the current A flowing to the load is also increased.

In a case where a negative determination is made in step S12, the processing proceeds to step S14, and the ECU 50 controls the duty ratio of the large injector 31 to a target value corresponding to the control pressure Pb, while maintaining the duty ratio of the small injector 32 constant. As a result, as illustrated in FIG. 14A, the large EJE flow rate Q1 is decreased to a value corresponding to the control pressure Pb, and is maintained at that value. As a result, the increase in the generated water is stopped, and the increase in the current A is also stopped (time point t2). Note that in step S14, the duty ratio of the small injector 32 may also be changed (for example, decreased).

When the required power is increased in this manner, the duty ratio of the large injector 31 is instantaneously increased while the duty ratio of the small injector 32 is kept constant (step S13), and thus the instantaneous gas flow rate flowing through the anode flow path 33 is increased. As a result, the MEA retained water W1, which has been increased due to the increase in the power generation amount, can be efficiently discharged. That is, immediately after the increase in the supply amount of the fuel gas, the generated water accumulates in the vicinity of the membrane electrode assembly 20 rather than in the anode flow path 33. Therefore, by instantaneously increasing the injection amount of the large injector 31, which is suitable for draining the MEA retained water W1, the retained water in the fuel cell stack can be efficiently discharged.

In a case where the required power is decreased, the ECU 50 determines whether or not the degree of decrease in the required power is equal to or greater than a predetermined value, on the basis of the signal from the accelerator opening degree sensor 51. More specifically, it is determined whether or not the required power is decreased by an amount equal to or greater than a predetermined value, or whether or not the rate of decrease of the required power is equal to or greater than a predetermined value. Then, when it is determined that the degree of decrease in the required power is equal to or greater than the predetermined value, it is determined that the control start condition is satisfied and the processing of FIG. 15B is started.

As illustrated in FIG. 15B, the ECU 50 first calculates the target pressure Pa of the fuel gas at the inlet of the fuel cell stack 100 in step S21. In this case, in order to decrease the inlet pressure P promptly, the ECU 50 calculates a value that is lower by a predetermined value or a predetermined ratio than the control pressure Pb corresponding to the required power determined by the accelerator pedal opening degree, as the target pressure Pa. The target pressure Pa is decreased as the degree of decrease in the required power is increased.

Next, in step S22, ECU 50 determines whether or not the pressure P detected by the pressure sensor 52 is greater than the target pressure Pa. In a case where an affirmative determination is made in step S22, the processing proceeds to step S23, and the ECU 50 instantaneously decreases the duty ratio of the large injector 31 to a target value corresponding to the target pressure Pa, while maintaining the duty ratio of the small injector 32 constant. As a result, as illustrated in FIG. 14B, the large EJE flow rate Q1 is instantaneously decreased (time point t3) while the small EJE flow rate Q2 is kept constant. The decrease in the duty ratio continues until the pressure P detected by the pressure sensor 52 reaches the target pressure Pa. As a result, the amount of generated water that is generated in the membrane electrode assembly 20 is decreased, and the current A flowing to the load is also decreased.

In a case where a negative determination is made in step S22, the processing proceeds to step S24, and the ECU 50 controls the duty ratio of the large injector 31 to a target value corresponding to the control pressure Pb, while maintain the duty ratio of the small injector 32 constant. As a result, as illustrated in FIG. 14B, the large EJE flow rate Q1 is increased to a value corresponding to the control pressure Pb, and is maintained at that value. As a result, the decrease in the generated water is stopped, and the decrease in the current A is also stopped (time point t4). Note that in step S24, the duty ratio of the small injector 32 may also be changed (for example, increased).

When the required power is decreased in this manner, the duty ratio of the large injector 31 is instantaneously decreased while the duty ratio of the small injector 32 is kept constant (step S23), and thus the instantaneous gas flow rate flowing through the anode flow path 33 is decreased. At this time, although the generation amount of the MEA retained water W1 is decreased due to the decrease in the power generation amount, the instantaneous gas injection amount is also decreased accordingly, and thus the retained water can be efficiently discharged. That is, immediately after the decrease in the supply amount of the fuel gas, the MEA retained water W1 is decreased, but the flow-path retained water W2 is decreased with a delay. In view of this, since the duty ratio of the small injector 32, which is suitable for draining the flow-path retained water W2, is maintained, the retained water in the fuel cell stack can be efficiently discharged.

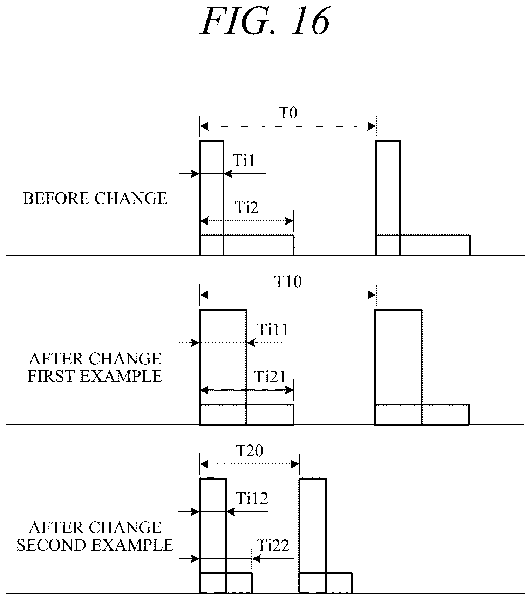

In step S13 of FIG. 15A, the duty ratio of the large injector 31 is increased while the duty ratio of the small injector 32 is kept constant, and a specific example thereof will be described. FIG. 16 is a diagram illustrating an example of the pulse waveforms of the injectors 31 and 32 before changing the duty ratio of the large injector 31, and an example (first example, second example) of the pulse waveforms after changing the duty ratio. Note that in FIG. 16, the injection mode is set such that the large injector 31 and the small injector 32 are turned on at the same timing, but the small injector 32 may be turned on after the large injector 31 is turned on, and the injection mode is not limited to the example of in FIG. 16.

As illustrated in FIG. 16, before the duty ratio of the large injector 31 is changed (before time point t1 in FIG. 14A), the large injector 31 and the small injector 32 are turned on at the cycle T0, the pulse width (valve opening time) of the large injector 31 is Ti1, and the pulse width (valve opening time) of the small injector 32 is Ti2.

In the first example after the change (after time point t1 in FIG. 14A), the large injector 31 and the small injector 32 are turned on at the same cycle T10 as the cycle T0, the pulse width of the large injector 31 is Ti11, and the pulse width of the small injector 32 is Ti21. The pulse width Ti21 of the small injector 32 is equal to the pulse width Ti2 before the change. On the other hand, the pulse width Till of the large injector 31 is longer than the pulse width Ti1 before the change. As a result, the duty ratio of the large injector 31 is increased while the duty ratio of the small injector 32 is kept constant.

In the second example after the change, the large injector 31 and the small injector 32 are turned on at the cycle T20 shorter than the cycle T0, the pulse width of the large injector 31 is Ti12, and the pulse width of the small injector 32 is Ti22. The pulse width Ti12 of the large injector 31 is equal to the pulse width Ti1 before the change. On the other hand, the pulse width Ti22 of the small injector 32 is shorter than the pulse width Ti2 by the shortened cycle. As a result, the duty ratio of the large injector 31 is increased while the duty ratio of the small injector 32 is kept constant.

In step S23 of FIG. 15B, the duty ratio of the large injector 31 is decreased while the duty ratio of the small injector 32 is kept constant, and the pulse waveform in this case can also be changed in the same manner as in FIG. 16. In this case, in the first example after the change, the pulse width Till of the large injector 31 is shorter than the pulse width Ti1 before the change, with the same cycle as that before the change. In addition, in the second example after the change, the cycle T20 after the change is longer than the cycle T0 before the change, and the pulse width Ti22 of the small injector 32 is longer than that before the change by that amount. In FIGs. 15A and 15B, the duty ratio of the large injector 31 is increased or decreased while the duty ratio of the small injector 32 is kept constant, but the duty ratio of the small injector 32 may not be constant. That is, the duty ratio of the small injector 32 may not be constant as long as the ECU 50 controls the large injector 31 and the small injector 32 such that, when the required power is increased, the degree of increase in the duty ratio of the large injector 31 is made greater than the degree of increase in the duty ratio of the small injector 32, and when the required power is decreased, the degree of decrease in the duty ratio of the large injector 31 is made greater than the degree of decrease in the duty ratio of the small injector 32.

According to the present embodiment, in addition to the operations and effects described above, the following operations and effects are further achievable.
(1) The ECU 50 controls the large injector 31 and the small injector 32 such that, in a case where the injection mode is the dual injection mode in which both the large injector 31 and the small injector 32 inject the fuel gas, when the required power is increased, the average value of the injection amount per unit time of the large injector 31 is increased more than that of the small injector 32, and when the required power is decreased, the average value of the injection amount per unit time of the large injector 31 is decreased more than that of the small injector 32 (FIGs. 15A and 15B).
   As a result, when the required power is increased, the injection amount of the large injector 31 is increased preferentially over that of the small injector 32. When the required power is increased, the MEA retained water W1 is increased, and then the flow-path retained water W2 is increased, but by preferentially increasing the injection amount of the large injector 31, the drainage performance of the MEA retained water W1 can be enhanced, and thus the retained water in the fuel cell stack can be efficiently discharged. In addition, when the required power is decreased, the injection amount of the large injector 31 is decreased preferentially over that of the small injector 32. When the required power is decreased, the MEA retained water W1 is decreased, and then the flow-path retained water W2 is decreased, but by preferentially decreasing the injection amount of the large injector 31, the drainage performance of the flow-path retained water W2 can be maintained, and thus the retained water in the fuel cell stack can be efficiently discharged.
(2) When the injection mode is the dual injection mode, the ECU 50 controls the injectors 31 and 32 such that the large injector 31 injects the fuel gas at a duty ratio (Ti1/T0) (first target duty ratio) corresponding to the required power, and the small injector 32 injects the fuel gas at a duty ratio (Ti2/T0) (second target duty ratio) corresponding to the required power (FIG. 16). Furthermore, when the injection mode is the dual injection mode, when the required power is increased, the ECU 50 increases the degree of increase in the duty ratio of the large injector 31 to a greater extent than the degree of increase in the duty ratio of the small injector 32, and when the required power is decreased, the ECU 50 increases the degree of decrease in the duty ratio of the large injector 31 to a greater extent than the degree of decrease in the duty ratio of the small injector 32. As a result, by changing the duty ratio, it is possible to obtain favorable drainage performance from the fuel cell stack according to the transient operation.
(3) When the injection mode is the dual injection mode, when the required power is increased, the ECU 50 increases the duty ratio of the large injector 31 while maintaining the duty ratio of the small injector 32 constant, and when the required power is decreased, the ECU 50 decreases the duty ratio of the large injector 31 while maintaining the duty ratio of the small injector 32 constant (FIGs. 15A and 15B). As a result, only by changing the duty ratio of the large injector, it is possible to obtain favorable drainage performance from the fuel cell stack according to the transient operation, and the configuration is easy to implement.

In the above embodiment, fuel gas is introduced into the fuel cell stack 100 through the through-hole 102a opened in the end unit 102, but the configuration of a gas inlet portion is not limited to the above. In the above embodiment, fuel gas is discharged from the fuel cell stack 100 through the through-hole 102f opened in the end unit 102, but the configuration of a gas outlet portion is not limited to this. In the above embodiment, the injector 31 is configured to include three injectors 31A to 31C having the same configuration as the injector 32, but the configuration of the injector 31 is not limited to this. For example, the injector 31 may be configured to include a single injector with a large injection amount instead of multiple injectors 31A to 31C.

In the above embodiment, the gas supply part SP1, which functions as a first supply part, supplies the fuel gas to the fuel cell stack 100 through the large injector 31 (a first injector) and the large ejector 41 (a first ejector) arranged in the large flow path PA11 (a first supply flow path). Additionally, the gas supply part SP2, as a second supply part, supplies the fuel gas to the fuel cell stack 100 through the small injector 32 (a second injector) and the small ejector 42 (a second ejector) arranged in the small flow path PA12 (a second supply flow path). However, the configuration of the first supply part and the second supply part is not limited to the above. A reed valve may be interposed between the first circulation flow path PA21 (a first circulation flow path) and the second circulation flow path PA22 (a second circulation flow path).

In the above embodiment, the ECU 50, which functions as a control unit, causes the small injector 32 to inject the fuel gas simultaneously with the large injector 31 injecting the fuel gas, or simultaneously with the large injector 31 stopping the injection of the fuel gas (FIG. 7A and FIG. 7B). However, as long as the first injector and the second injector are controlled such that when either the first injector or the second injector injects the fuel gas at a predetermined cycle, the other of the first injector and the second injector injects the fuel gas during the predetermined cycle, the configuration of the control unit may be any. However, from the perspective of improving drainage performance, it is preferable to control the first injector and the second injector such that the second injector injects the fuel gas simultaneously with the first injector injecting the fuel gas, or within a predetermined time after the first injector injects the fuel gas. In other words, it is preferable to control the injectors so that the second injector injects immediately after the first injector injects. Alternatively, it is preferable to control the first injector and the second injector such that the second injector turns on within a predetermined delay time Tc1 after the first injector has finished injecting. In other words, it is preferable to control the first injector and the second injector such that the second injector injects the fuel gas before the injection amount of the fuel gas injected from the first injector reaches zero.

In the above embodiment, an example of applying the fuel cell system 10 to a vehicle is described. However, the fuel cell system of the present invention can also be applied to a moving body other than a vehicle, such as an aircraft and boat, as well as a robot and various industrial machines.

The above explanation is an explanation as an example and the present invention is not limited to the aforesaid embodiment or modifications unless sacrificing the characteristics of the invention. The aforesaid embodiment can be combined as desired with one or more of the aforesaid modifications. The modifications can also be combined with one another.

31, 32 injector, 31A, 31B, 31C injector, 41, 42 ejector, 50 ECU, 100 fuel cell stack, 102a, 102f through-hole, PA11 large flow path, PA12 small flow path, PA21, PA22 circulation flow path, SP1, SP2 gas supply part

## Claims

1. A fuel cell system comprising:
a fuel cell configured to generate electric power through an electrochemical reaction between a fuel gas and an oxidant gas, and including a gas inlet portion through which the fuel gas flows into the fuel cell and a gas outlet portion through which the fuel gas flow out of the fuel cell;
a first supply part including a first injector configured to inject the fuel gas and supply the fuel gas to the fuel cell through a first supply flow path connected to the gas inlet portion;
a second supply part including a second injector configured to inject the fuel gas and supply the fuel gas to the fuel cell through a second supply flow path connected to the gas inlet portion; and
a control unit configured to control the first injector and the second injector to inject the fuel gas in an injection mode in accordance with a required power, wherein
the first supply part further includes a first ejector provided between the first injector and the gas inlet portion to guide the fuel gas flowing out through the gas outlet portion to the first supply flow path through a first circulation flow path,
the second supply part further includes a second ejector provided between the second injector and the gas inlet portion to guide the fuel gas flowing out through the gas outlet portion to the second supply flow path through a second circulation flow path,
the first injector and the second injector are configured such that an amount of the fuel gas injected per a unit time by the first injector is greater than an amount of the fuel gas injected per the unit time by the second injector,
the first ejector and the second ejector are configured such that a first circulation flow rate ratio is smaller than a second circulation flow rate ratio, the first circulation flow rate ratio being a ratio of a circulation amount by the first ejector to an amount of the fuel gas injected by the first injector, the second circulation flow rate ratio being a ratio of a circulation amount by the second ejector to an amount of the fuel gas injected by the second injector, and
the control unit is configured to control the first injector and the second injector such that when either the first injector or the second injector injects the fuel gas at a predetermined cycle, the other of the first injector and the second injector injects the fuel gas during the predetermined cycle.

2. The fuel cell system according to claim 1, wherein
the control unit is configured to control the first injector and the second injector such that the second injector injects the fuel gas simultaneously with the first injector or within a predetermined time after the first injector injects the fuel gas.

3. The fuel cell system according to claim 2, wherein
the control unit is configured to control the first injector and the second injector such that the second injector injects the fuel gas before the amount of the fuel gas injected by the first injector becomes zero.

4. The fuel cell system according to any one of claims 1 to 3, wherein
the first injector includes a plurality of injectors, each having the same configuration as the second injector.

5. The fuel cell system according to any one of claims 1 to 3, wherein
an injection duration of the fuel gas injected by the second injector during the predetermined cycle is longer than an injection duration of the fuel gas injected by the first injector.
